**Europäisches Patentamt**

**European Patent Office**

**Office européen des brevets**

(19)

(11) Veröffentlichungsnummer: **0 269 565**
**B1**

(12) # EUROPÄISCHE PATENTSCHRIFT

(45) Veröffentlichungstag der Patentschrift:
07.03.90

(51) Int. Cl.⁴: **F16L 3/14**

(21) Anmeldenummer: **87810633.5**

(22) Anmeldetag: **04.11.87**

(54) **Gepraegtes Aufhaengeband.**

(30) Priorität: **27.11.86  CH 4740/86**

(43) Veröffentlichungstag der Anmeldung:
**01.06.88 Patentblatt 88/22**

(45) Bekanntmachung des Hinweises auf die Patenterteilung:
**07.03.90 Patentblatt 90/10**

(84) Benannte Vertragsstaaten:
**AT BE CH DE ES FR GB GR IT LI LU NL SE**

(56) Entgegenhaltungen:
**CH-A- 435 881**
**CH-A- 608 287**
**DE-U- 1 942 377**
**FR-A- 1 584 566**

(73) Patentinhaber: **Arthur Schmid AG, Industriestrasse 4,
CH-8590 Romanshorn(CH)**

(72) Erfinder: **Principe, Viktor, Arbonerstrasse 62,
CH-8590 Romanshorn(CH)**

(74) Vertreter: **Feldmann, Clarence Paul et al, c/o
Patentanwaltsbüro FELDMANN AG Postfach
Kanalstrasse 17, CH-8152 Glattbrugg(CH)**

## Beschreibung

Die vorliegende Erfindung betrifft ein Band, welches insbesondere um einen ortsfesten Körper und um einen aufzuhängenden Gegenstand geschlungen wird, das mit einer Reihe von in gleichmässigen Abständen voneinander angeordneten Prägungen versehen ist, die auf der Vorderseite des Bandes als Erhebungen und auf der Rückseite als Vertiefungen erscheinen, wobei die Erhebungen einen Teil mit senkrecht zur Bandoberfläche verlaufender Aussenwand aufweisen, und dass die Vertiefungen auf der Rückseite des Bandes einen Teil mit senkrecht zur Bandoberfläche verlaufender Innenwand aufweisen derart, dass die vertikal zur Bandoberfläche versetzten Wandteile der Erhebungen formschlüssig in die vertikal zur Bandoberfläche versetzten Teile der Vertiefungen passen.

Insbesondere dient das Band zur Aufhängung von Rohrleitungen, Kabeln, die beispielsweise in einem u-förmigen Kanal liegen, Luftkanälen und untergehängten Decken.

Verschiedene für solche Zwecke besonders ausgebildete Bänder sind bekannt, beispielsweise gelochte Bänder und Bänder, die mit Prägungen versehen sind. Gelochte Bänder haben den Nachteil, dass sie durch die Lochung geschwächt sind. Von den Bändern, die mit Prägungen versehen sind, gibt es verschiedene Ausführungen, nämlich solche, bei denen die Prägungen so geformt sind, dass sie rätschenartig übereinander gleiten können; Bänder dieser Art dienen zum Zusammenziehen von Bündeln oder Ballen. Sie sind für Aufhängezwecke weniger geeignet. Ferner sind Bänder bekannt, die nur an den Enden mit Prägungen verschiedener Form versehen sind. Solche Bänder sind aber für Aufhängezwecke ungeeignet.

Ein bekanntes Aufhängeband (CH-A 435.881) ist mit einer sich über die ganze Bandlänge erstreckenden geprägten Verzahnung versehen, die so ausgebildet ist, dass die Erhebungen auf der Vorderseite des Bandes formschlüssig in die Vertiefungen auf der Rückseite des Bandes eingreifen können. Bei der Verwendung dieses Bandes zu Aufhängezwecken, müssen die sich überlappenden Bandenden, durch eine Muffe zusammengehalten werden. Die Flanken der geprägten Verzahnung verlaufen zwar relativ steil, aber nicht senkrecht zur Bandoberfläche. Die in Längsrichtung des Bandes wirkende Zugkraft wird mit Hilfe der Verzahnung von einem Bandende auf das andere Bandende übertragen. Infolge der Neigung der Zahnflanken zur Bandoberfläche entsteht dabei eine senkrecht zur Bandoberfläche verlaufende Komponente, die das Bestreben hat, die formschlüssige Verbindung zu lösen. Diese Kraftkomponente bedingt eine solide Muffe, damit sie die Bandenden zusammenhalten kann. Die geprägte, quer zum Band verlaufende Verzahnung erstreckt sich über einen erheblichen Teil der Breite. Dadurch wird nicht nur die Zugfestigkeit des Bandes verringert, die Prägung hat auch zur Folge, dass das Band bei scharfen Biegungen leicht bricht.

Diese Probleme wurden durch das Band der Anmelderin gemäss CH-A 608 287 gelöst und dieses Band hat sich in der Praxis bestens bewährt. Hingegen hat die Herstellung etwelche Probleme gezeigt. Insbesondere die Schultern in der Erhebung und der Vertiefung führten zu einem Materialfluss, der zu Strukturänderungen im Kristallgitter des Metalls führten, die eine Sprödigkeit hervorruft. Dies führte daher auch immer wieder zu Rissen beziehungsweise Haarrissen und zu dementsprechendem Produktionausfall.

Durch die vielen Versuche hat sich gezeigt, dass mit einigen kleinen formgeberischen Aenderungen diese Produktionsprobleme gelöst werden können. Dies wird durch die kennzeichnenden Merkmale von Anspruch 1 erreicht.

In der Zeichnung ist ein Ausführungsbeispiel des Erfindungsgegenstandes dargestellt.
Es zeigt:

Fig. 1 ein Bandstück in Längsschnitt, in vergrössertem Massstab und in
Fig. 2 eine Aufsicht auf das Band.

Das Aufhändgeband wird aus einem flachen Band 1 mit einer Breite von etwa 2cm durch Rollprägung geformt. Die Bandvorderseite ist mit 2, die Bandrückseite mit 3 bezeichnet. Die Bezeichnungen, Bandvorderseite und Bandrückseite haben keine effektive Bedeutung bezüglich Anwendungen oder Herstellung, sondern dienen lediglich in der Beschreibung und den Ansprüchen zur Definition. Die auf der Bandvorderseite 2 durch Prägung gebildeten Erhebungen 4 erscheinen auf der Bandrückseite als Vertiefungen 5. Die Vertiefungen haben im Querschnitt, der dem Längsschnitt des Bandes entspricht, eine der Oberfläche der Bandrückseite 3 ausgehende, Partie mit zur Oberfläche des Bandes senkrecht verlaufenden Seitenwänden 6. Anschliessend folgt eine Partie 7 , die konisch zum tiefsten Punkt der Vertiefung 5 verläuft. Ein scharfkantiger Uebergang von den senkrechten Seitenwänden 6 zu den geneigten Wänden 7 der Vertiefung wird dadurch vermieden. Der Boden 8, der Vertiefung 5 verläuft wieder mindestens annähernd parallel zur Oberfläche des Bandes 1. Der Boden 8 wird begrenzt durch eine gerundete Nut 9, die im wesentlichen der Materialverdrängung und der Erhöhung der Festigkeit dient.

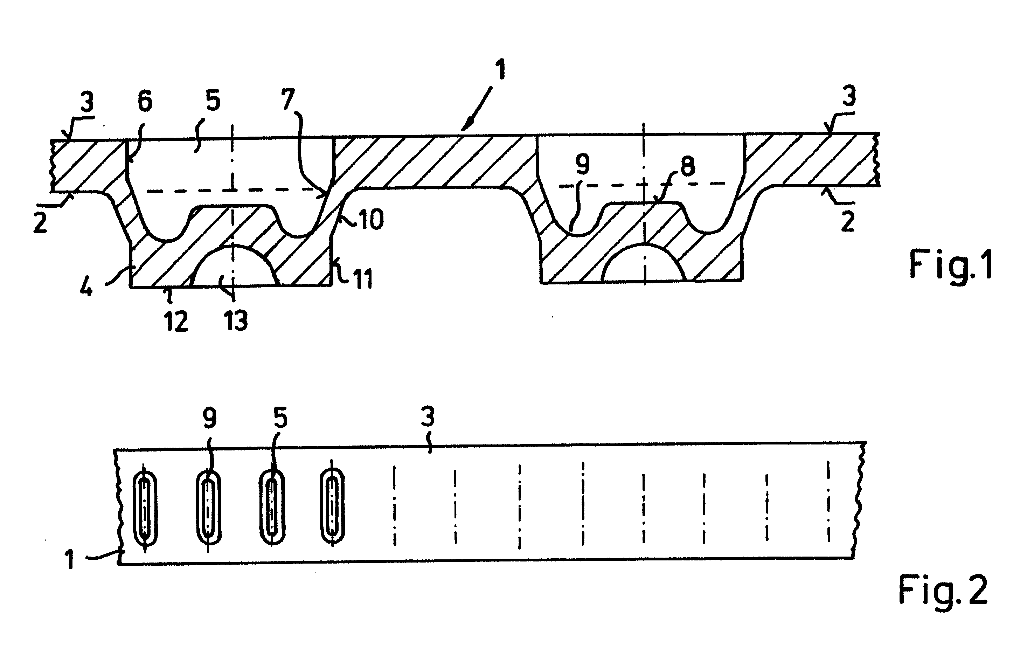

Die Erhebungen 4 auf der Vorderseite 2 des Bandes 1 sind zwar den Vertiefungen 5 auf der Rückseite ähnlich, jedoch nicht einfach der komplementären Form entsprechend. Von der Bandoberfläche der Vorderseite 2 folgt erst eine umlaufende geneigte Wand 10, die der Neigung der Wandpartie 7 entspricht, daran anschliessend folgt eine Partie 11, bei der die Wände wieder genau senkrecht zur Bandoberfläche verlaufen. Die verbleibende Fläche 12 der Erhebung verläuft wieder etwa parallel zur Bandoberfläche, in der lediglich noch eine etwa zentrische Materialverdrängungsmulde 13 eingepresst ist. Auch hier wird wieder die Bildung eines scharfkantigen Ueberganges vermieden. Der Teil der Erhebung 4, die eine senkrecht zur Bandoberfläche aufweisende Wandpartie aufweist ist minim kleiner als jener Teil der Vertiefung 5, die ja ebenfalls eine senkrecht zur Bandoberfläche aufweisende Wandpartie aufweist. Bei der Verwendung des Bandes wird wie eingangs beschrieben, mindestens eine Schlaufe gebildet, bei der mindestens ein Bandende der Schlaufe das Band überlappt oder beide Bandenden einander überlappen und die Erhebungen mit den Vertiefungen formschlüssig in Eingriff stehen. Dabei liegen die vertikalen Wandpartien direkt aufeinander und vermögen, die in der Bandlängsrichtung verlaufenden Kräfte, optimal zu übertragen. Die Form der Erhebung kann mehr oder weniger beliebig gestaltet sein, solange der Verlauf der Wände entsprechend der vorgeschriebenen Form geprägt ist. So können die Erhebungen und Vertiefungen eine runde oder eine längliche Form haben, wie dies Figur 2 zeigt.

**Patentansprüche**

1. Band, welches insbesondere um einen ortsfesten Körper und um einen aufzuhängenden Gegenstand geschlungen wird, das mit einer Reihe von in gleichmässigen Abständen voneinander angeordneten Prägungen versehen ist, die auf der Vorderseite (2) des Bandes (1) als Erhebungen (4) und auf der Rückseite (3) als Vertiefungen (5) erscheinen, wobei die Erhebungen (4) einen Teil mit senkrecht zur Bandoberfläche verlaufender Aussenwand (11) aufweisen, und dass die Vertiefungen (5) auf der Rückseite (3) des Bandes (1) einen Teil mit senkrecht zur Bandoberfläche verlaufender Innenwand (6) aufweisen, derart dass die vertikal zur Bandoberfläche versetzten Wandteile (11), der Erhebungen (4) formschlüssig in die vertikal zur Bandoberfläche versetzten Wandteile (6) der Vertiefungen (5) passen, dadurch gekennzeichnet, dass die vorderseitigen Erhebungen (4) eine parallel zur Bandoberfläche verlaufende Fläche (12) mit einer zentralen muldenförmigen Vertiefung (13) aufweisen, während die vertikal zur Bandoberfläche verlaufenden Wandoberflächen (11) der Erhebungen (4) über konisch verlaufende Wandteile (10) in die Bandoberfläche übergehen und dass die vertikalen Innenwandteile (6) der rückseitigen Vertiefungen (5) über konisch verlaufende Wandteile (7) in trogförmige Mulden (9) übergehen, die die durch die vorderseitig angebrachten zentralen, muldenförmigen Vertiefungen gebildeten Erhebungen (8) umgeben.

2. Band nach Anspruch 1, dadurch gekennzeichnet, dass die tragförmigen Mulden (9) als gerundete Nut ausgebildet sind.

**Claims**

1. Strap which is, in particular, wound around a fixed body and around an object to be hung; which is provided with a series of stamped impressions disposed at equal intervals from each other, which appear on the front (2) of the strap (1) as elevations (4) and on the back (3) as indentations (5); in which the elevations (4) have a section with an outer wall (11) running perpendicularly to the strap surface and in which the indentations (5) on the reverse side (3) of the strap (1) have a section with an inner wall (6) running perpendicularly to the strap surface, such that the wall-sections (11) of the elevations (4) disposed perpendicularly to the strap surface fit exactly into the wall-sections (6) of the indentations (5) disposed perpendicularly to the strap surface; characterised in that the elevations (4) on the front of the strap have a surface (12) with a central trough-shaped cavity (13), while the wall-surfaces (11) of the elevations (4) running perpendicularly to the strap surface merge with the strap surface via conical wall sections (10); and in that the vertical sections of the inner walls (6) of the indendations (5) on the reverse side of the strap merge via conical wall-sections (7) into trough-shaped cavities (9) which surround the elevations (8) formed by the central trough-shaped indentations formed in the front of the strap.

2. Strap according to Claim 1, characterised in that the trough-shaped cavities (9) are formed as rounded grooves.

**Revendications**

1. Attache, passée en particulier autour d'un corps fixe et autour d'un objet à suspendre, et munie d'une série de gaufrages disposés à des intervalles réguliers les uns des autres et qui apparaissent sur la face avant (2) de l'attache (1) sous la forme de reliefs (4) et sur l'envers (3) sous la forme de creux (5), les reliefs (4) présentant une partie avec une paroi externe (11) perpendiculaire à la surface de l'attache et les creux (5) sur l'envers (3) de l'attache (1) présentant une partie avec une paroi interne (6) perpendiculaire à la surface de l'attache, de telle sorte que les portions de paroi (11) des reliefs (4) s'étendant verticalement par rapport à la surface de l'attache aient une forme s'ajustant parfaitement aux portions de paroi (6) des creux (5) s'étendant verticalement par rapport à la surface de l'attache, caractérisée en ce que les reliefs (4) de la face avant présentent une surface (12) parallèle à la surface de l'attache comportant une cavité centrale (13) en forme de cuvette, tandis que les surfaces de paroi (11) des reliefs (4) s'étendant verticalement par rapport à la surface de l'attache sont reliées à la surface de l'attache par des portions de paroi formant cône (10) et que les portions de paroi interne verticales (6) des creux de l'envers (5) sont reliées par des portions de paroi formant cône (7) aux cuvettes en forme d'auges (9), qui entourent les reliefs (8) formés par les creux centraux en forme de cuvette ménagés sur le devant.

2. Attache selon la revendication 1, caractérisée en ce que les cuvettes en forme d'auge (9) sont constituées d'une gorge circulaire.

Fig.1

Fig.2